# FASCICULE DE BREVET EUROPEEN

(11) **EP 2 072 397 B1**
(45) Date de publication et mention de la délivrance du brevet: **11.02.2015**
(21) Numéro de dépôt: 08171754.8
(22) Date de dépôt: 16.12.2008
(51) Int. Cl.: B64D 29/00, F01D 25/24, F02C 7/20, F02K 3/06, B64D 27/26, B64D 29/06, F01D 25/16

(54) **Extension de carter intermédiaire pour turboréacteur d'aéronef, comprenant une rainure annulaire sectorisée de réception des capots de nacelle**
Verlängerung des Zwischengehäuses für ein Flugzeugturbinentriebwerk, die eine in Sektoren unterteilte Ringnut zur Aufnahme der Triebwerksverkleidung umfasst
Intermediate casing extension for an aircraft jet engine, comprising a sectorised annular groove for receiving nacelle covers

(30) Priorité: 18.12.2007 FR 0759939
(43) Date de publication de la demande: 24.06.2009
(73) Titulaire: Snecma, 75015 Paris (FR)
(72) Inventeur: Duchatelle, Thierry, François, Maurice, 94000 Creteil (FR); Sanchez, Arnaud, 91800 Brunoy (FR)
(74) Mandataire: Ilgart, Jean-Christophe

(56) Documents cités:
- EP-A- 1 553 262
- WO-A-2005/110845

## Description

La présente invention se rapporte de façon générale à un ensemble propulsif pour aéronef, du type comprenant un turboréacteur, une nacelle enveloppant le turboréacteur, ainsi qu'un mât d'accrochage pourvu d'une structure rigide et de moyens d'accrochage du turboréacteur sur la structure rigide.

De tels ensembles sont par exemple connus des documents EP 1 553 262 et WO 2005/110845.

Plus précisément, l'invention se rapporte à une extension de carter intermédiaire du turboréacteur d'un tel ensemble, destinée à réaliser l'interface entre le carter intermédiaire et des capots d'inverseur de poussée de la nacelle.

Le mât d'accrochage, également appelé « EMS » (de l'anglais « Engine Mounting Structure »), ou encore « pylon » ou « engine pylon », permet de suspendre le turboréacteur au-dessous de la voilure de l'aéronef, ou bien de monter ce turboréacteur au-dessus de cette même voilure, ou bien encore de le rapporter en partie arrière du fuselage. Il est en effet prévu pour constituer l'interface de liaison entre un turboréacteur et une partie structurale donnée de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

La nacelle est quant à elle classiquement équipée de plusieurs capots enveloppant le turboréacteur et permettant un accès à ce dernier en position ouverte, ces capots étant connus sous les dénominations de capots de soufflante et de capots d'inverseur de poussée, ces derniers étant articulés sur la structure primaire du mât d'accrochage.

Le turboréacteur comporte un carter de soufflante prolongé vers l'arrière par un carter dit intermédiaire, comprenant une virole extérieure ainsi qu'un flasque transversal avant et un flasque transversal arrière parallèles et disposés radialement intérieurement par rapport à cette virole extérieure, ce carter intermédiaire comprenant en outre des bras structuraux répartis angulairement et s'étendant radialement entre les flasques avant et arrière, jusqu'à la virole extérieure.

C'est cette même virole extérieure de carter intermédiaire qui est prolongée vers l'aval par une extension comprenant une extrémité aval annulaire de liaison formant une rainure annulaire ouverte radialement vers l'extérieur, destinée à recevoir les capots de nacelle, et plus précisément une nervure de forme complémentaire portée par ces mêmes capots, généralement les capots d'inverseur de poussée. Ainsi, la coopération entre la nervure et la rainure complémentaire permet la transmission des efforts aérodynamiques de la nacelle vers le turboréacteur, en phases de décollage, de vol, et d'atterrissage, en particulier les efforts axiaux, et encore plus particulièrement les efforts axiaux de contre-poussée lorsque les systèmes d'inverseur de poussée équipant les capots de nacelle sont actionnés.

De plus, la simple pénétration de la nervure dans la rainure assure une ouverture aisée et rapide des capots d'inverseur articulés sur le mât, cette ouverture étant par exemple réalisée pour la mise en oeuvre d'opérations de maintenance de l'aéronef stationné au sol.

Un inconvénient relatif à cette solution réside dans le fait que la rainure annulaire, continue ou interrompue le long de la circonférence de l'extension, se trouve réalisée au sein d'une même et unique pièce annulaire, qu'il est nécessaire de changer entièrement en cas de dégradation d'une partie de la rainure de réception des capots. Cet inconvénient est extrêmement pénalisant, surtout qu'il a été constaté que la rainure annulaire est généralement sollicitée par les capots de manière disproportionnée le long de celle-ci, impliquant l'apparition de zones d'usures très localisées.

L'invention a donc pour but de remédier au moins partiellement au problème mentionné ci-dessus, relatif aux réalisations de l'art antérieur.

Pour ce faire, l'invention a pour objet une extension de carter intermédiaire pour turboréacteur d'aéronef, selon la revendication 1.

Par conséquent, lorsqu'une partie de la rainure de réception doit être remplacée, il n'est plus nécessaire de changer l'intégralité de l'extension, mais seulement le ou les secteurs angulaires concernés. Ainsi, la segmentation de la rainure de réception des capots de nacelle permet avantageusement de diminuer la durée des opérations de maintenance réalisées sur l'extension, et procure par ailleurs une économie de matière.

D'autre part, les secteurs angulaires peuvent avantageusement différer les uns des autres, en termes de conception et/ou de matériau, suivant le niveau de sollicitation auquel ils sont destinés à être soumis. A titre d'exemple indicatif, dans le cas où les capots de nacelle concernés, à savoir préférentiellement les capots d'inverseur de poussée, sont équipés de systèmes d'inverseur de poussées actionnés par des moyens de commande du type vérins, les parties de la rainure annulaire situées en regard de ces moyens de commande sont généralement les plus sollicitées. Un matériau et/ou une conception adéquates peuvent alors être adoptés pour réaliser le/les secteurs angulaires correspondant aux parties fortement sollicitées, afin qu'elles résistent mieux à l'usure.

De plus, le nombre de secteurs angulaires constituant l'extrémité aval annulaire de liaison est supérieur ou égal à trois, et préférentiellement compris entre six et douze.

En outre, l'extension comporte en outre une virole de jonction solidaire desdits secteurs angulaires formant ladite extrémité aval annulaire de liaison, ladite virole étant située en amont desdits secteurs angulaires et destinée à prolonger une extrémité aval de la virole extérieure du carter intermédiaire.

Selon une première réalisation, ladite virole de jonction est réalisée d'une seule pièce sur laquelle sont montés les secteurs angulaires formant ladite extrémité aval annulaire de liaison, de préférence par vissage.

Selon une seconde réalisation, ladite virole de jonction est réalisée à l'aide d'une pluralité de secteurs angulaires, chacun réalisé d'un seul tenant avec l'un desdits secteurs angulaires formant ladite extrémité aval annulaire de liaison. Dans ce cas, les secteurs angulaires de la virole de jonction sont reliés entre eux de préférence par une liaison axiale, de type bride longitudinale, de manière à obtenir la raideur souhaitée pour l'anneau reconstitué par ces secteurs angulaires.

Toujours de manière préférentielle, lesdits secteurs angulaires formant ladite extrémité aval annulaire de liaison sont réalisés, en alternance dans ladite direction circonférentielle, dans un premier matériau et dans un second matériau. Cette particularité permet en effet d'adapter les secteurs en fonction du niveau de contrainte rencontré, comme mentionné ci-dessus. Les secteurs réalisés dans le second matériau, dits seconds secteurs, peuvent alors être ceux destinés à offrir une forte résistance à l'usure, par exemple par l'emploi de l'acier ou du titane. Les autres secteurs réalisés dans le premier matériau, dits premiers secteurs, sont alors quant à eux destinés à offrir une résistance à l'usure moindre, en raison de leur plus faible niveau de sollicitation par les capots de nacelle. L'emploi de matériaux plus légers est alors envisageable, comme les alliages d'aluminium.

Néanmoins, il est indiqué que l'invention pourrait être étendue à l'emploi d'un nombre de matériaux distincts supérieur à deux, de même qu'il n'est pas nécessaire de respecter l'alternance stricte entre les premiers et seconds secteurs. En outre, toujours pour des raisons d'allègement de l'extension, les secteurs les moins sollicités pourraient adopter une conception différente des autres, par exemple en présentant des perçages.

L'invention a également pour objet un turboréacteur pour aéronef, comprenant un carter intermédiaire équipé à l'extrémité aval de sa virole extérieure d'une extension telle que décrite ci-dessus.

Enfin, l'invention a aussi pour objet un ensemble propulsif pour aéronef comprenant un turboréacteur tel que décrit ci-dessus, ainsi qu'une nacelle comprenant des capots de nacelle coopérant avec ladite rainure annulaire ouverte radialement vers l'extérieur. De préférence, cet ensemble comporte également un mât d'accrochage dudit turboréacteur comprenant une structure rigide ainsi que des moyens d'accrochage dudit turboréacteur sur ladite structure rigide, lesdits capots de nacelle étant articulés sur ladite structure rigide.

D'autres avantages et caractéristiques de l'invention apparaîtront dans la description détaillée non limitative ci-dessous.

Cette description sera faite au regard des dessins annexés parmi lesquels ;
- la figure 1 représente un vue schématique de côté d'un ensemble propulsif pour aéronef conforme à la présente invention, la nacelle ayant été retirée pour des raisons de clarté ;
- la figure 2 représente une vue partielle en coupe plus détaillée de l'ensemble montré sur la figure 1, et prise le long de la ligne II-II de cette même figure ;
- la figure 3 représente une vue partielle en perspective d'un capot inverseur de poussée appartenant à la nacelle montrée sur la figure 2 ;
- la figure 4 représente une vue en perspective d'un système d'inverseur de poussée destiné à équiper le capot montré sur la figure 3 ;
- la figure 5 représente une vue schématique du système d'inverseur de poussée montrée en configuration actionnée ;
- la figure 6 représente une vue partielle agrandie en coupe de celle montrée sur la figure 2, représentant la coopération entre l'extension de carter intermédiaire et l'un des capots de nacelle ;
- la figure 7 représente une vue en perspective de l'extension montrée sur la figure 2, selon un mode de réalisation préféré de la présente invention ;
- la figure 8 représente une vue en coupe prise selon la ligne VIII-VIII de la figure 7 ;
- la figure 8a représente une vue similaire à celle montrée sur la figure 8, avec l'extension réalisée de manière alternative ; et
- la figure 9 représente une vue en perspective d'un secteur destiné à la formation d'une extension de carter intermédiaire selon un autre mode de réalisation préféré de la présente invention.

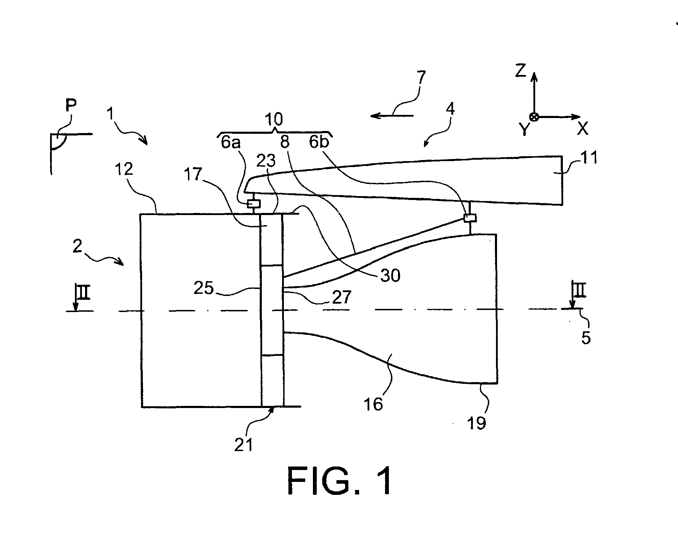

En référence à la figure 1, on voit un ensemble propulsif 1 pour aéronef selon un mode de réalisation préféré de la présente invention, cet ensemble 1 étant destiné à être fixé sous une aile d'aéronef (non représentée).

Globalement, l'ensemble propulsif 1, également appelé système propulsif intégré, est composé d'un turboréacteur 2, d'une nacelle (non représentée sur cette figure), et d'un mât d'accrochage 4 pourvu de moyens d'accrochage 10 du turboréacteur sur ce mât, ces moyens étant de préférence constitués d'une attache moteur avant 6a, d'une attache moteur arrière 6b, ainsi que d'un dispositif de reprise des efforts de poussée prenant la forme de deux bielles 8 (l'une étant masquée par l'autre sur la figure 1). A titre indicatif, il est noté que l'ensemble 1 comporte une autre série d'attaches (non représentées) permettant d'assurer la suspension de cet ensemble 1 sous la voilure de l'aéronef.

Dans toute la description qui va suivre, par convention, on appelle X la direction longitudinale de l'ensemble 1 qui est également assimilable à la direction longitudinale du turboréacteur 2, cette direction X étant parallèle à un axe longitudinal 5 de ce turboréacteur 2. D'autre part, on appelle Y la direction orientée transversalement par rapport à l'ensemble propulsif 1 et également assimilable à la direction transversale du turboréacteur 2, et Z la direction verticale ou de la hauteur, ces trois directions X, Y et Z étant orthogonales entre-elles.

D'autre part, les termes « avant », et « arrière » sont à considérer par rapport à une direction d'avancement de l'aéronef rencontrée suite à la poussée exercée par le turboréacteur 2, cette direction étant représentée schématiquement par la flèche 7. De manière analogue, les termes « amont » et « aval » sont à considérer par rapport à une direction principale d'écoulement des flux au sein du turboréacteur, direction opposée à la direction 7.

Sur la figure 1, on peut voir que seules les attaches moteur 6a, 6b, les bielles de reprise de poussée 8 ainsi que la structure rigide 11 du mât d'accrochage 4 ont été représentées. Les autres éléments constitutifs non représentés de ce mât 4, tels que les moyens d'accrochage de la structure rigide 11 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose d'une conception globalement classique, à savoir comportant à l'avant un carter de soufflante 12, prolongé vers l'arrière par un carter intermédiaire 21.

Le carter intermédiaire 21 comprend une virole extérieure 23 située dans le prolongement aérodynamique arrière du carter de soufflante, ainsi que des flasques transversaux 25, 27 disposés radialement intérieurement par rapport à cette virole extérieure 23, le carter intermédiaire 21 comprenant en outre des bras structuraux 17 répartis angulairement et s'étendant radialement entre les flasques 25, 27, jusqu'à la virole extérieure 23 qu'ils contactent.

Le turboréacteur comprend également un carter central 16, également dit carter « core », prolongeant le carter intermédiaire 21 vers l'arrière, à partir du flasque transversal arrière 27 sur lequel il est raccordé. Il est noté que le carter central s'étend jusqu'à une extrémité arrière 19 de plus grande dimension, également dénommée carter d'éjection. Enfin, la virole extérieure 23 du carter intermédiaire est prolongée vers l'aval par une extension annulaire 30, également objet de la présente invention, dont le but principal est d'établir une liaison entre la virole extérieure 23 et les capots de nacelle directement adjacents vers l'aval. L'extension 30 sera présentée de façon détaillée ci-dessous.

L'attache moteur avant 6a est interposée entre l'extrémité avant de la structure rigide 11, également dite structure primaire, et le carter de soufflante 12 ou la virole extérieure 23 du carter intermédiaire 21.

L'attache arrière 6b est quant à elle interposée entre la structure rigide 11 et l'extrémité arrière 19 du carter central 16. Les deux attaches moteur avant 6a, 6b sont traversées par un plan médian P orienté verticalement et longitudinalement, et passant par l'axe 5. Ce même plan P constitue un plan de symétrie pour les deux bielles 8 de reprise des efforts de poussée, de part et d'autre duquel elles se situent, respectivement. Chaque bielle 8 présente une extrémité arrière articulée sur un corps de l'attache moteur arrière 6b, ainsi qu'une extrémité avant raccordée sur le flasque transversal 27.

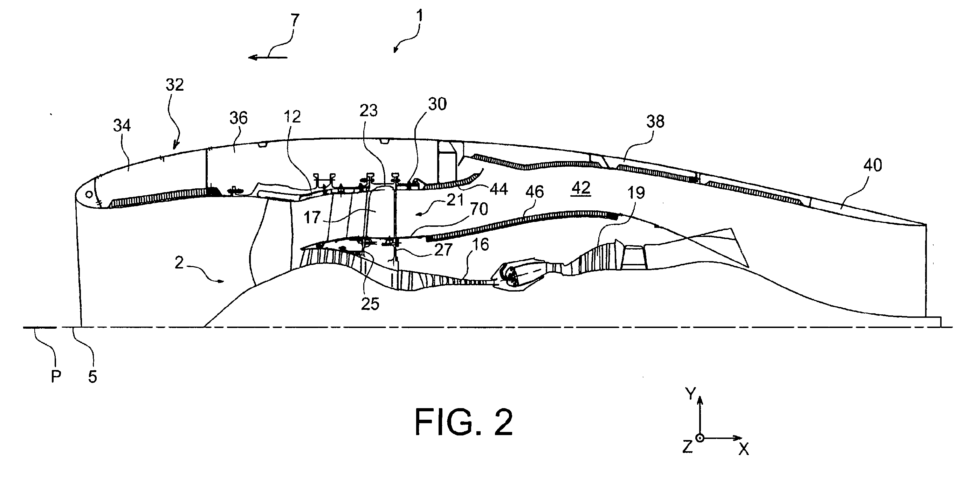

En référence à présent à la figure 2 plus détaillée et montrant la nacelle 32 de l'ensemble propulsif 1, il est noté que celle-ci forme une surface extérieure aérodynamique continue, constituée par une entrée d'air 34, des capots de soufflante 36, des capots d'inverseur de poussée 38, et un capotage arrière fixe 40, ces éléments étant agencés adjacents de l'avant vers l'arrière.

Les capots d'inverseur de poussée 38, généralement au nombre de deux et articulés sur la structure rigide du mât, délimitent de façon connue un canal annulaire de flux secondaire 42, grâce à des peaux annulaires externe 44 et interne 46.

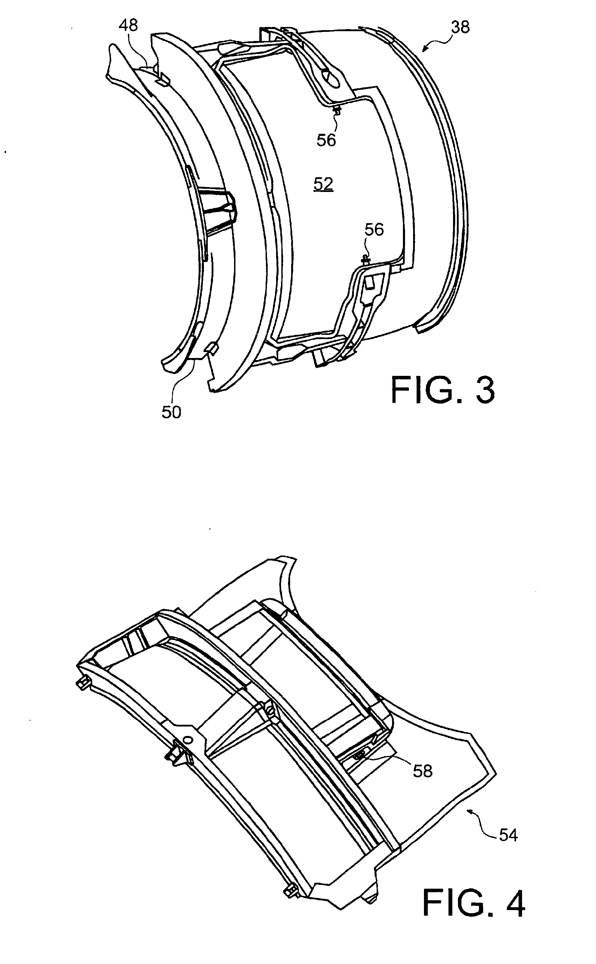

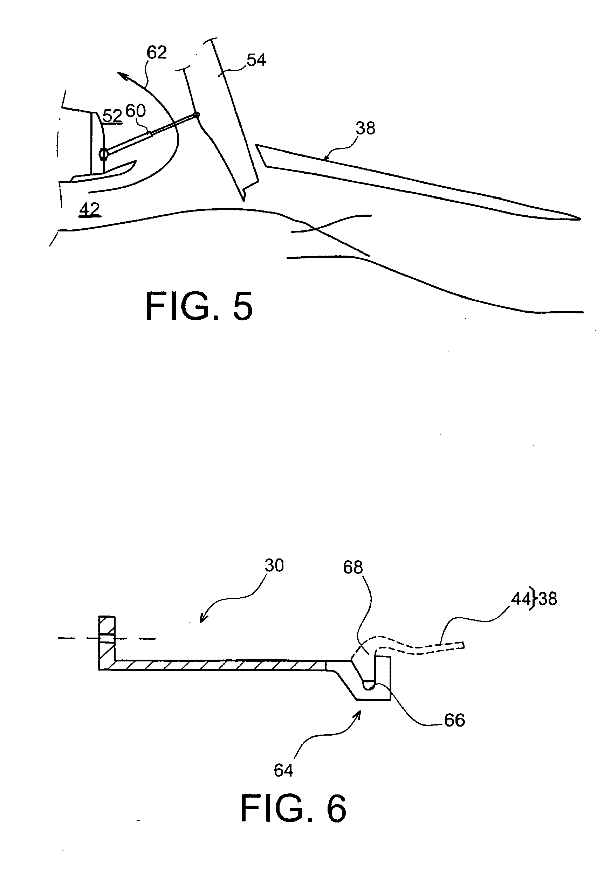

Comme montré sur les figures 3 et 4, chaque capot d'inverseur de poussée 38, également dénommé capot arrière ou capot « core », présente une forme générale de demi-cylindre, l'extrémité supérieure 48 étant destinée à être articulée sur la structure rigide du mât, et l'extrémité inférieure 50 étant destinée à être verrouillée à l'extrémité inférieure de l'autre capot 38, par des moyens conventionnels. De plus, il présente en son centre un logement 52 pour la mise en place d'un système d'inverseur de poussée, prenant ici la forme d'un système à porte pivotante 54 montré sur la figure 4. Globalement, ce système 54 forme donc un porte susceptible de pivoter autour de l'axe défini par les deux pions en regard 56 pratiqués dans l'ouverture 52, respectivement destinés à se loger dans des orifices de réception 58 de la porte 54. De plus, des moyens de commande comme un vérin ou similaire sont capables d'assurer la mise en rotation de la porte 54, comme montré sur la figure 5 sur laquelle le vérin déployé 60 permet de maintenir la porte 54 en configuration d'inversion de poussée. Dans cette configuration, l'air empruntant le canal secondaire 42 est forcé de s'extraire du capot 38 du fait de l'obturation du ce canal vers l'aval par la porte inclinée 54, cette extraction d'air en dehors de la nacelle s'effectuant sensiblement à contre courant en raison de l'inclinaison de cette porte 54, comme en témoigne la flèche 62. Par exemple, le vérin 60 présente une extrémité avant raccordée sur le cadre du logement 52 et une extrémité arrière raccordée sur la porte elle-même.

Sur la figure 6, on peut apercevoir que le capot 38 coopère avec l'extension 30. En effet, celle-ci dispose d'une extrémité aval annulaire de liaison 64 formant une rainure annulaire 66 ouverte radialement vers l'extérieur, et recevant une nervure 68 de forme complémentaire portée par le capot 38, à l'extrémité amont de sa peau annulaire externe 44.

La rainure annulaire 66 présente de préférence une section en forme de V, dans laquelle se loge donc la nervure 68 faisant saillie radialement vers l'intérieur, et disposant également d'une section en forme de V. La coopération entre la nervure 68 et la rainure complémentaire 66 permet la transmission des efforts aérodynamiques du capot d'inverseur 38 vers le turboréacteur, en particulier les efforts axiaux, et encore plus particulièrement les efforts axiaux de contre-poussée transitant par les vérins 60 lorsque les portes 54 sont déployées, comme cela est le cas sur la figure 5.

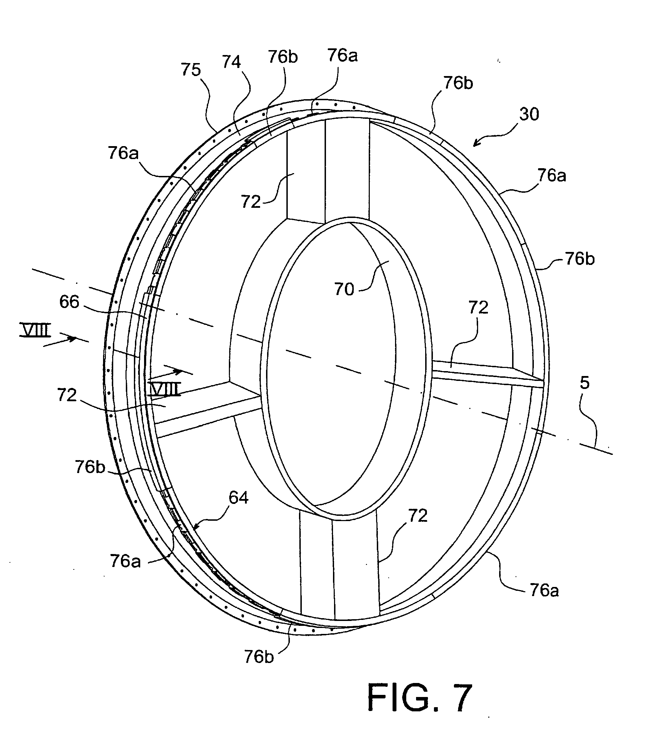

Sur la figure 7, il est montré un arrangement également dénommé « kit inverseur de poussée », intégrant l'extension 30 comme extrémité radialement externe. Cet arrangement comprend, radialement vers l'intérieur, un anneau 70 destiné à être centré sur l'axe 5 du turboréacteur, et dont le but est d'établir la jonction mécanique avec la peau annulaire interne 46 des capots d'inverseur de poussée 38. L'anneau 70 et l'extension annulaire 30 concentriques sont reliés rigidement entre eux par l'intermédiaire de bras structuraux 72 agencés radialement, et par exemple prévus au nombre de quatre en étant espacés d'environ 90° les uns par rapport aux autres.

Pour ce qui concerne l'extension 30 destinée à établir la jonction mécanique avec la peau annulaire externe 44, celle-ci présente une virole de jonction d'un seul tenant 74, dont l'extrémité avant en forme de collerette annulaire 75 permet la fixation par vissage de l'arrangement sur l'extrémité aval de la virole extérieure 23 du carter intermédiaire. L'une des particularités de la présente invention réside dans le fait que la virole de jonction 74, s'étendant d'une seule pièce sur 360°, porte vers l'avant une pluralité de secteurs angulaires 76a, 76b formant conjointement l'extrémité aval annulaire de liaison 64. Ainsi, ils forment ensemble une structure s'étendant de façon sensiblement continue sur 360° autour de l'axe 5, définissant la rainure annulaire 66 qui peut quant à elle être continue ou interrompue le long de la circonférence de l'extension. De façon générale, cette rainure 66, lorsqu'elle est destinée à coopérer avec deux capots d'inverseur de poussée, est interrompue seulement au niveau du passage de la structure rigide du mât d'accrochage sur laquelle sont articulés ces capots, et au niveau des extrémités inférieures de ces mêmes capots. Par conséquent, la rainure 66 présente habituellement deux interruptions diamétralement opposées, de préférence dites à 6 heures et à midi.

Dans l'arrangement de la figure 7, qui peut être rapporté en l'état sur le carter intermédiaire avec les bras structuraux 72 prolongeant vers l'arrière certains des bras structuraux 17 de ce carter, deux sortes de secteurs angulaires sont arrangés en alternance dans la direction circonférentielle. Ainsi, les premiers secteurs angulaires 76a, réalisés dans un premier matériau léger tel qu'un alliage d'aluminium, sont rapportés sur la virole de jonction 74 en des positions où le niveau d'efforts transmis par les capots d'inverseur de poussée est relativement faible. Ils alternent avec des seconds secteurs angulaires 76b, réalisés dans un second matériau plus résistant à l'usure, tels que les aciers ou le titane, et rapportés sur la virole de jonction 74 en des positions où le niveau d'efforts transmis par les capots d'inverseur de poussée est plus important. En particulier, de tels seconds secteurs 76b sont situés au droit, dans la direction longitudinale/axiale, des vérins de commande 60 des systèmes d'inversion de poussée, que ces systèmes soient du type « à portes » comme décrit ci-dessus, ou qu'ils soient d'une autre conception connue de l'homme du métier, comme celle dite « à grilles ».

Le nombre de ces secteurs angulaires 76a, 76b disposés de manière alternée et facilement remplaçables en cas d'usure est retenu en fonction des besoins rencontrés, par exemple dix comme dans le mode de réalisation préféré représenté.

En outre, les premiers secteurs angulaires 76a peuvent être davantage allégés par une conception différente de celle des seconds secteurs 76b, par exemple en présentant des perçages. A cet égard, il est noté que les premiers et seconds secteurs 76a, 76b pourraient alternativement être réalisés dans un même matériau et uniquement différer par leur conception, ou même encore être de conception sensiblement identique. Quoi qu'il en soit, l'étendue angulaire peut varier d'un secteur à l'autre, le choix étant effectué en fonction des besoins rencontrés.

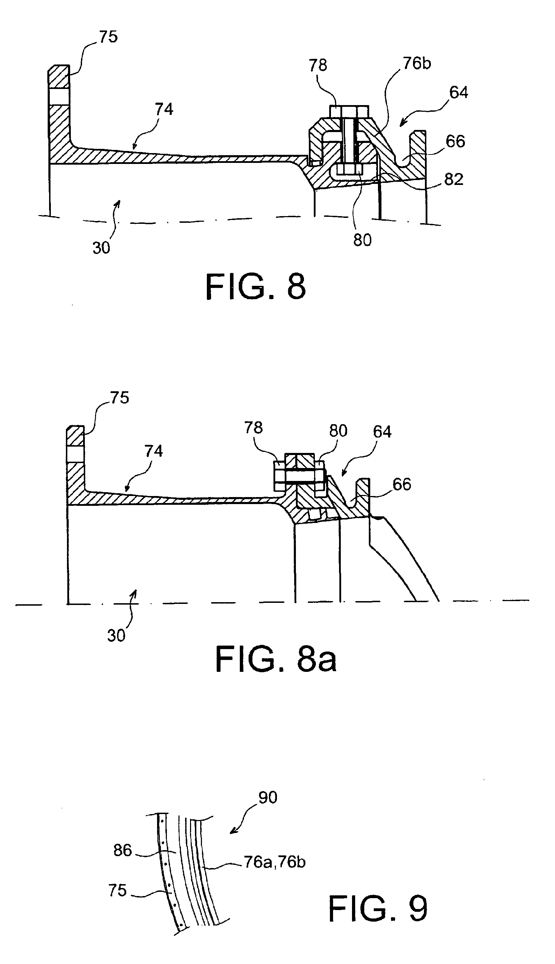

Le caractère facilement remplaçable des secteurs adjacents dans la direction circonférentielle provient de leur assemblage de façon vissée sur l'extrémité aval de la virole de jonction 74, à l'aide de vis 78 orientées sensiblement radialement, comme montré sur la figure 8. Dans cette configuration, les écrous 80 coopérant respectivement avec les vis 78 sont logés dans des orifices débouchants 82 prévus à cet effet dans l'extrémité aval de la virole de jonction 74, rapportée par vissage sur le carter intermédiaire à l'aide de la collerette 75, ou alternativement réalisée d'un seul tenant avec la virole extérieure 23 du carter intermédiaire.

De façon alternative, la jonction vissée entre les secteurs angulaires 76a, 76b et la virole 74 peut s'effectuer à l'aide de vis 78 orientées longitudinalement, comme montré sur la figure 8a avec la présence de deux brides de fixation en contact, s'étendant radialement vers l'extérieur.

La figure 9 montre un autre mode de réalisation préféré de la présente invention, dans lequel la virole de jonction n'est pas réalisée d'une seule pièce, mais de manière sectorisée à la manière de l'extrémité aval annulaire de liaison 64 formant rainure annulaire. En effet, la virole de jonction est formée par une pluralité de secteurs angulaires de virole 86 dont l'un est montré sur la figure 9, ces secteurs 86 étant donc adjacents dans la direction circonférentielle. De préférence, chaque secteur 86 porte sa propre collerette 75 pour son montage sur la virole extérieure du carter intermédiaire, et est réalisé d'une seule pièce avec l'un des secteurs 76a, 76b précités. Par conséquent, la pièce unique comporte alors un secteur de collerette 86 en amont et un secteur de rainure 76a, 76b en aval, de préférence de même étendue angulaire, pour former un secteur d'extension référencé 90.

Bien entendu, diverses modifications peuvent être apportées par l'homme du métier à l'ensemble propulsif 1 pour aéronef qui vient d'être décrit, uniquement à titre d'exemple non limitatif.

## Revendications

1. Extension (30) de carter intermédiaire (21) pour turboréacteur d'aéronef, destinée à faire saillie vers l'aval à partir d'une virole extérieure (23) dudit carter intermédiaire, ladite extension comprenant une extrémité aval annulaire de liaison (64) formant une rainure annulaire (66) ouverte radialement vers l'extérieur, destinée à recevoir des capots de nacelle (38),
**caractérisée en ce que** ladite extrémité aval annulaire de liaison (64) est réalisée à l'aide d'une pluralité de secteurs angulaires (76a, 76b), de nombre supérieur ou égal à trois, et **en ce qu'**elle comporte en outre une virole de jonction (74) solidaire desdits secteurs angulaires (76a, 76b) formant ladite extrémité aval annulaire de liaison (64), ladite virole étant située en amont desdits secteurs angulaires et destinée à prolonger une extrémité aval de la virole extérieure (23) du carter intermédiaire.

2. Extension selon la revendication 1, **caractérisée en ce que** ladite virole de jonction (74) est réalisée d'une seule pièce sur laquelle sont montés les secteurs angulaires (76a, 76b) formant ladite extrémité aval annulaire de liaison.

3. Extension selon la revendication 2, **caractérisée en ce que** les secteurs angulaires (76a, 76b) formant ladite extrémité aval annulaire de liaison sont montés par vissage sur ladite virole de jonction (74).

4. Extension selon la revendication 3, **caractérisée en ce que** ladite virole de jonction (74) est réalisée à l'aide d'une pluralité de secteurs angulaires (86), chacun réalisé d'un seul tenant avec l'un desdits secteurs angulaires (76a, 76b) formant ladite extrémité aval annulaire de liaison (64).

5. Extension selon l'une quelconque des revendications précédentes, **caractérisée en ce que** lesdits secteurs angulaires (76a, 76b) formant ladite extrémité aval annulaire de liaison sont réalisés, en alternance dans ladite direction circonférentielle, dans un premier matériau et dans un second matériau.

6. Turboréacteur (2) pour aéronef, comprenant un carter intermédiaire (21) équipé à l'extrémité aval de sa virole extérieure (23) d'une extension (30) selon l'une quelconque des revendications précédentes.

7. Ensemble propulsif (1) pour aéronef comprenant un turboréacteur (2) selon la revendication 6, ainsi qu'une nacelle (32) comprenant des capots de nacelle (38) coopérant avec ladite rainure annulaire (66) ouverte radialement vers l'extérieur.

8. Ensemble propulsif (1) selon la revendication 7, **caractérisé en ce qu'**il comporte également un mât d'accrochage (4) dudit turboréacteur comprenant une structure rigide (11) ainsi que des moyens d'accrochage dudit turboréacteur sur ladite structure rigide, lesdits capots de nacelle (38) étant articulés sur ladite structure rigide (11).

## Patentansprüche

1. Erweiterung (30) eines Zwischengehäuses (21) für ein Turbostrahltriebwerk eines Flugzeugs, die dazu bestimmt ist, von einem Außenring (23) des Zwischengehäuses in stromabwärtiger Richtung vorzuspringen, wobei die Erweiterung ein stromabwärtiges ringförmiges Verbindungsende (64) umfasst, das eine radial nach außen offene Ringnut (66) bildet, die dazu bestimmt ist, Gondelverkleidungen (38) aufzunehmen,
**dadurch gekennzeichnet, dass** das stromabwärtige ringförmige Verbindungsende (64) mit Hilfe einer Vielzahl von Winkelsektoren (76a, 76b) in einer Anzahl größer oder gleich drei ausgebildet ist und dass sie ferner einen Verbindungsring (74) umfasst, der mit den das stromabwärtige ringförmige Verbindungsende (64) bildenden Winkelsektoren (76a, 76b) fest verbunden ist, wobei der Ring den Winkelsektoren vorgeordnet und dazu bestimmt ist, ein stromabwärtiges Ende des Außenrings (23) des Zwischengehäuses zu verlängern.

2. Erweiterung nach Anspruch 1, **dadurch gekennzeichnet, dass** der Verbindungsring (74) aus einem Stück gefertigt ist, an dem die das stromabwärtige ringförmige Verbindungsende bildenden Winkelsektoren (76a, 76b) angebracht sind.

3. Erweiterung nach Anspruch 2, **dadurch gekennzeichnet, dass** die das stromabwärtige ringförmige Verbindungsende bildenden Winkelsektoren (76a, 76b) an dem Verbindungsring (74) durch Verschrauben angebracht sind.

4. Erweiterung nach Anspruch 3, **dadurch gekennzeichnet, dass** der Verbindungsring (74) mit Hilfe einer Vielzahl von Winkelsektoren (86) ausgebildet ist, wobei ein jeder mit einem der das stromabwärtige ringförmige Verbindungsende (64) bildenden Winkelsektoren (76a, 76b) einstückig ausgebildet ist.

5. Erweiterung nach einem der vorhergehenden Ansprüche, **dadurch gekennzeichnet, dass** die das stromabwärtige ringförmige Verbindungsende bildenden Winkelsektoren (76a, 76b) in Umfangsrichtung abwechselnd aus einem ersten Werkstoff und aus einem zweiten Werkstoff gefertigt sind.

6. Turbostrahltriebwerk (2) für ein Flugzeug, umfassend ein Zwischengehäuse (21), das an dem stromabwärtigen Ende seines Außenrings (23) mit einer Erweiterung (30) nach einem der vorhergehenden Ansprüche ausgestattet ist.

7. Triebwerk (1) für ein Flugzeug, umfassend ein Turbostrahltriebwerk (2) nach Anspruch 6 sowie eine Gondel (32), die Gondelverkleidungen (38) umfasst, welche mit der radial nach außen offenen Ringnut (66) zusammenwirken.

8. Triebwerk (1) nach Anspruch 7, **dadurch gekennzeichnet, dass** es auch einen Mast zum Anschließen (4) des Turbostrahltriebwerks umfasst, der eine starre Struktur (11) sowie Mittel zum Anschließen des Turbostrahltriebwerks an der starren Struktur umfasst, wobei die Gondelverkleidungen (38) an der starren Struktur (11) angelenkt sind.

## Claims

1. Extension (30) of an intermediate casing (21) for an aircraft jet engine, intended to project towards the downstream end from an external shell (23) of said intermediate casing, said extension comprising an annular connecting downstream end (64) forming an annular groove (66) open radially towards the outside, intended to receive nacelle covers (38),
**characterised in that** said annular connecting downstream end (64) is produced by means of a plurality of angular sectors (76a, 76b), in a number greater than or equal to three, and **in that** it also comprises a joining shell (74) secured to said angular sectors (76a, 76b) forming said annular connecting downstream end (64), said shell being situated upstream of said angular sector and intended to extend a downstream end of the external shell (23) of the intermediate casing.

2. Extension according to claim 1, **characterised in that** said joining shell (74) is produced in a single piece, on which the angular sectors (76a, 76b) forming said annular connecting downstream end are mounted.

3. Extension according to claim 2, **characterised in that** the angular sectors (76a, 76b) forming said annular connecting downstream end are mounted by screwing on said joint shell (74).

4. Extension according to claim 3, **characterised in that** said joining shell (74) is produced by means of a plurality of angular sectors (86), each produced in a single piece with one of said angular sectors (76a, 76b) forming said annular connecting downstream end (64).

5. Extension according to any one of the preceding claims, **characterised in that** said angular sectors (76a, 76b) forming said annular connecting downstream end are produced, in alternation in said circumferential direction, from a first material and a second material.

6. Jet engine (2) for an aircraft, comprising an intermediate casing (21) equipped at the downstream end of its external shell (23) with an extension (30) according to any one of the preceding claims.

7. Propulsion assembly (1) for an aircraft comprising a jet engine (2) according to claim 6, as well as a nacelle (32) comprising nacelle covers (38) cooperating with said annular groove (66) open radially towards the outside.

8. Propulsion assembly (1) according to claim 7, **characterised in that** it also comprises an attachment strut (4) for said jet engine comprising a rigid structure (11) and means of attaching said jet engine to said rigid structure, said nacelle covers (38) being articulated on said rigid structure (11).
